# DEMANDE DE BREVET EUROPEEN

(11) **EP 1 081 603 A1**
(43) Date de publication de la demande: **07.03.2001**
(21) Numéro de dépôt: 00203007.0
(22) Date de dépôt: 29.08.2000
(51) Int. Cl.: G06F 15/167, G06F 13/00, G06F 13/16, G06F 13/362

(54) **acces à une ressource collective**

(30) Priorité: 31.08.1999 FR 9910954; 29.12.1999 FR 9916678
(71) Demandeur: Koninklijke Philips Electronics N.V., 5621 BA Eindhoven (NL)
(72) Inventeur: Nouvet, Thierry, 75008 Paris (FR); Mutz, Stéphane, 75008 Paris (FR); Guene, Mickael, 75008 Paris (FR)
(74) Mandataire: den Braber, Gerard Paul

(57) **Abrégé**

Un système fonctionnel comprend un ensemble de fonctions (F) devant accéder à une ressource collective (RSRC). Un tel système peut être, par exemple, un dispositif de traitement de données comprenant plusieurs processeurs devant accéder à une mémoire collective. Pour des raisons de coûts, il est souhaitable de garantir à une ou plusieurs fonctions un certain accès minimum tout en gardant une certaine flexibilité au niveau des accès. A cette fin, le système comprend une interface agencée (INT) pour mettre en oeuvre un schéma d'accès (AS) caractérisé par plusieurs états (S) parcourus d'une façon prédéterminée. Un état (S) constitue une possibilité d'accès d'une certaine étendue et définit un ordre de priorité selon lequel une fonction (F) peut accéder à la ressource collective (RSRC).

## Description

### DOMAINE TECHNIQUE

L'invention concerne l'accès à une ressource collective par un ensemble de fonctions. L'invention peut-être appliquée, par exemple, dans un dispositif de traitement de données comprenant plusieurs processeurs devant accéder à une mémoire collective. Un décodeur MPEG est un exemple d'un tel dispositif (MPEG est l'abréviation de Motion Picture Expert Group).

### ETAT DE LA TECHNIQUE ANTERIEURE

Il est possible de gérer l'accès à la ressource collective au moyen d'une interface. L'interface met en oeuvre un schéma d'accès selon lequel les fonctions peuvent accéder à la ressource collective.

Un schéma d'accès possible est caractérisé par un modèle d'accès répétitif (en anglais: repetitive access pattern). Le modèle d'accès comprend plusieurs intervalles de temps (en anglais: time-slots). Chaque intervalle de temps est attribué à une certaine fonction. Cela veut dire que la fonction concernée a accès à la ressource collective durant cet intervalle de temps. Supposons qu'un système fonctionnel comprend trois fonctions A, B et C. Un modèle d'accès peut consister à donner l'accès à la fonction A pendant deux unités de temps, ensuite à B pendant une unité de temps et finalement à C pendant trois unités de temps. Ce modèle comprendra donc six unités de temps au total et se répètera toutes les six unités de temps. Un tel schéma d'accès sera dénommé schéma d'accès fixe dans la suite.

Un autre schéma d'accès possible est caractérisé par un ordre de priorité. Une fonction doit faire une requête pour accéder à la ressource collective. L'interface recueille toutes les requêtes. Parmi les fonctions ayant une requête en cours, elle permet à la fonction ayant la plus haute priorité d'accéder à la ressource collective. Supposons à nouveau qu'un système fonctionnel comprend trois fonctions A, B et C. L'ordre de priorité peut-être A, B, C. Dans ce cas, la fonction A aura accès à la ressource collective indépendamment du fait qu'une requête de la fonction B ou C soit en cours. La fonction B aura accès à la ressource collective à condition qu'une requête de la fonction A ne soit pas en cours. La fonction C aura accès à la ressource à condition qu'une requête de la fonction A ou B ne soit pas en cours. Un tel schéma d'accès sera dénommé schéma d'accès par priorité dans la suite.

Les deux schémas d'accès décrits précédemment sont mentionnés dans la demande de brevet internationale publiée sous le numéro WO 95/31874. Cette demande concerne un décodeur MPEG. Elle préfère l'application du schéma d'accès fixe pour un tel décodeur.

### EXPOSE DE L'INVENTION

Un but de l'invention est de permettre une réduction de coût.

L'invention prend les aspects suivants en considération. En principe, chaque fonction doit avoir un accès à la ressource collective suffisant pour qu'elle puisse être effectuée correctement. L'accès d'une fonction quelconque à la ressource collective est déterminé par deux facteurs: premièrement, la capacité d'accès qu'offre la ressource collective et, deuxièmement, le schéma d'accès appliqué.

En principe, il est possible de garantir à chaque fonction un accès suffisant en faisant en sorte que la ressource collective offre une capacité d'accès relativement importante. Toutefois, plus grande est la capacité d'accès qu'offre la ressource collective, plus coûteuse sera, en général, la ressource collective. Supposons que la ressource collective est, par exemple, une mémoire. Dans ce cas, la capacité d'accès qu'offre la mémoire s'exprime généralement en termes de bande passante ou vitesse. En général, plus la vitesse d'une mémoire est grande, plus la mémoire sera coûteuse.

Le schéma d'accès fixe repartit, en effet, la capacité d'accès qu'offre la ressource collective parmi les différentes fonctions d'une façon prédéterminée. Donc, il convient de faire en sorte que la capacité d'accès et la répartition de celle-ci permettent à chaque fonction un accès suffisant à la ressource collective.

Le besoin d'accès d'une fonction peut varier dans le temps. Il est possible qu'une fonction doive accéder intensivement à la ressource collective pendant une certaine période et que cette fonction n'ait pas besoin d'un tel accès intensif pendant une autre période.

Le schéma d'accès fixe doit prendre en compte, pour chaque fonction, le pire des cas en termes de besoin d'accès. Ceci implique que, s'il y a une ou plusieurs fonctions dont le besoin d'accès varie considérablement dans le temps, la capacité d'accès qu'offre la ressource collective sera sous-utilisée la plupart du temps. Autrement dit, la ressource collective ne sera pas utilisée d'une manière très efficace. En termes de coût, le schéma d'accès fixe n'offre qu'un retour modeste sur l'investissement que représente la ressource collective.

Le schéma d'accès par priorité donne l'accès à la ressource collective sur demande. Ce schéma apporte donc de la flexibilité et, par conséquent, une utilisation plus efficace de la ressource collective. Ceci implique qu'en principe le schéma d'accès par priorité nécessite moins de capacité d'accès pour la ressource collective par rapport au schéma d'accès fixe. Par conséquent, le schéma d'accès par priorité permet, en principe, une réduction de coût au niveau de la ressource collective.

Toutefois, le schéma d'accès par priorité a certains inconvénients. Il sera généralement difficile de vérifier si chaque fonction a suffisamment d'accès à la ressource collective. En outre, il sera généralement difficile de vérifier si une fonction a toujours accès dans un délai critique suite à une requête. La difficulté de vérification est due au fait que l'étendue des accès d'une fonction ainsi que le délai entre une requête et l'accès qui en résulte, dépendent du comportement des différentes fonctions au niveau de leurs requêtes. Il faut donc des calculs ou des simulations à caractère statistique complexes afin de vérifier si un certain schéma d'accès par priorité permet un fonctionnement correct. En soi, ceci entraîne déjà un certain coût au niveau du développement.

L'exemple qui suit illustre un problème de blocage qui peut se produire avec un schéma par priorité. Il y a trois fonctions A, B et C dans l'ordre de priorité. A un certain instant, la fonction A a accès à la ressource collective. Pendant cet accès les fonctions B et C font une requête. L'accès de la fonction A etant achevé, la fonction B aura accès à la ressource collective. La requête de la fonction C reste en attente. La fonction A présente une requête pendant l'accès de la fonction B à la ressource collective. L'accès de la fonction B étant achevé, la fonction A aura à nouveau accès à la ressource collective. Si ceci continue, la fonction A fait une requête pendant l'accès de la fonction B et vice versa, la fonction C se trouvera effectivement bloquée pour l'accès à la ressource collective. Ce blocage durera jusqu'au moment où la fonction A ou B, ou les deux, diminueront la fréquence de leurs requêtes.

Il est possible d'éviter un blocage tel que décrit ci-dessus en faisant en sorte que les accès des fonctions les plus prioritaires soient de longueur relativement importante. Ainsi, après avoir accédé à la ressource collective, une telle fonction n'aurait besoin d'un nouvel accès qu'après une période relativement longue. D'une certaine façon, l'accès long fait que la fonction est tellement bien servie, qu'elle se tait pendant une relativement longue période. Par conséquent, la fréquence des requêtes des fonctions les plus prioritaires sera relativement basse. Ceci laissera de la place pour que les fonctions moins prioritaires puissent accéder à la ressource collective.

Toutefois, la solution au problème de blocage décrite dans le paragraphe précédent entraîne certains désavantages. Le délai entre une requête et l'accès qui en résulte sera relativement important notamment pour une fonction ayant une basse priorité. De plus, cette solution nécessitera que les fonctions les plus prioritaires soient munies d'une capacité de stockage relativement importante pour stocker temporairement des entités faisant l'objet d'un accès à la ressource collective. Ces capacités de stockage entraînent un certain coût. Une autre solution au problème de blocage décrit dans le paragraphe précédent, sera d'augmenter la capacité d'accès de la ressource collective. Mais ceci entraînera également un certain coût.

Selon l'invention, un système tel que défini dans le paragraphe introductif, comprend une interface agencée pour mettre en oeuvre un schéma d'accès caractérisé par plusieurs états parcourus d'une façon prédéterminée, un état constituant une possibilité d'accès d'une certaine étendue et définissant un ordre de priorité selon lequel une fonction peut accéder à la ressource collective.

Ainsi l'invention garantit à chaque fonction ayant la plus haute priorité dans un ou plusieurs états, un certain minimum d'accès à la ressource collective. En plus, l'invention garantit à de telles fonctions un certain délai maximal entre une requête et l'accès qui en résulte. Ceci facilite à la fois la conception du système et permet aux fonctions d'avoir une capacité de stockage relativement modeste. Par conséquent, l'invention permet une réduction de coût par rapport au schéma par priorité telle que décrit précédemment.

En même temps, l'invention permet une flexibilité dans le sens où une certaine fonction peut accéder intensivement à la ressource collective pour une certaine période de temps en cas de besoin. Par conséquent, la ressource collective sera utilisée d'une façon plus efficace par rapport au schéma d'accès fixe. Par conséquent, ceci permet à la ressource collective d'avoir une capacité d'accès réduite par rapport au schéma d'accès fixe. Par conséquent, l'invention permet une réduction de coût par rapport au schéma d'accès fixe.

L'invention sera décrite ci-dessous plus en détail par référence à des figures.

### BREVE DESCRIPTION DES FIGURES

La Figure 1 illustre un dispositif de traitement de signaux selon l'invention;
La Figure 2 illustre le fonctionnement de l'interface mémoire du dispositif;
La Figure 3 illustre un bloc de traitement de signaux du dispositif;
La Figure 4 illustre l'interface mémoire du dispositif;
La Figure 5 illustre un accès en lecture d'un bloc;
La Figure 6a et 6b illustrent un arbitrage d'accès à une mémoire collective;
La Figure 7 illustre une interface d'accès de l'interface mémoire;
La Figure 8 illustre un dispositif de mémoire tampon de l'interface mémoire;
La Figure 9 illustre un dispositif de mémoire tampon pour lecture;
La Figure 10 illustre des caractéristiques de base de l'invention;
La Figure 11 illustre un arbitre pour gérer l'accès à une mémoire collective par différents processus;
La Figure 12 illustre un schéma pour la sélection d'un processus dans l'arbitre illustré dans la Figure 11.

### MODES DE REALISATION

Les remarques suivantes concernent les signes de référence. Des entités similaires sont désignées par une référence par lettres identiques dans toutes les figures. Plusieurs entités similaires peuvent apparaître dans une seule figure. Dans ce cas, un chiffre ou un suffixe est ajouté à la référence par lettres afin de distinguer entre des entités similaires. Le chiffre ou le suffixe peut être omis pour des raisons de convenance. Ceci s'applique pour la description ainsi que pour les revendications.

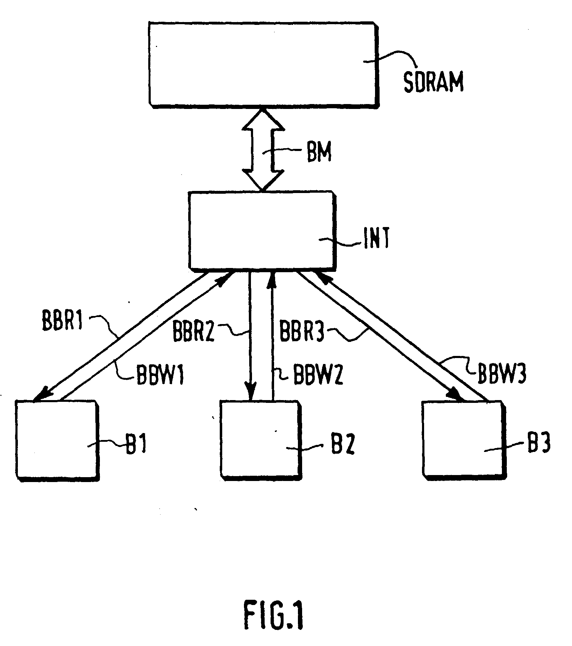

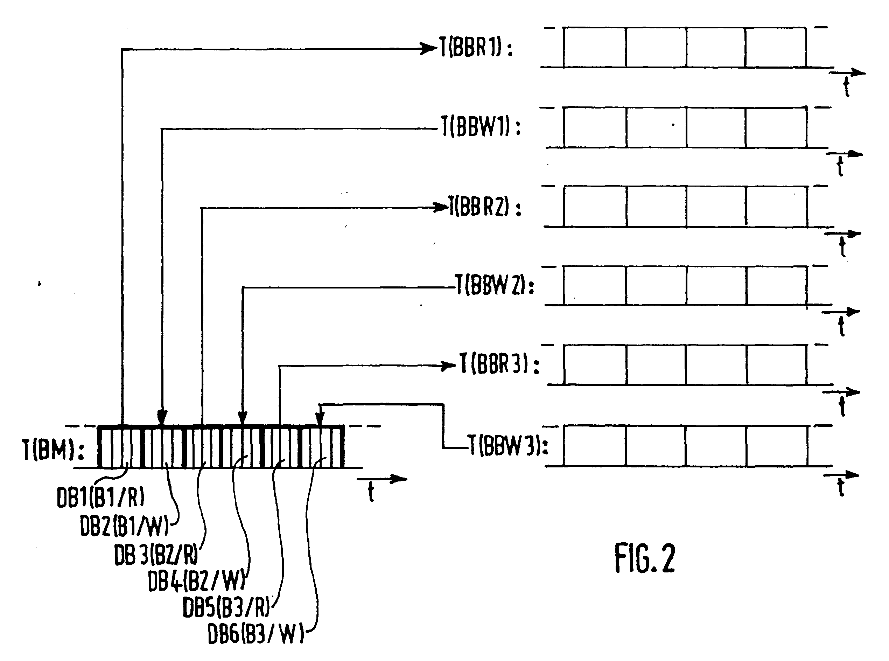

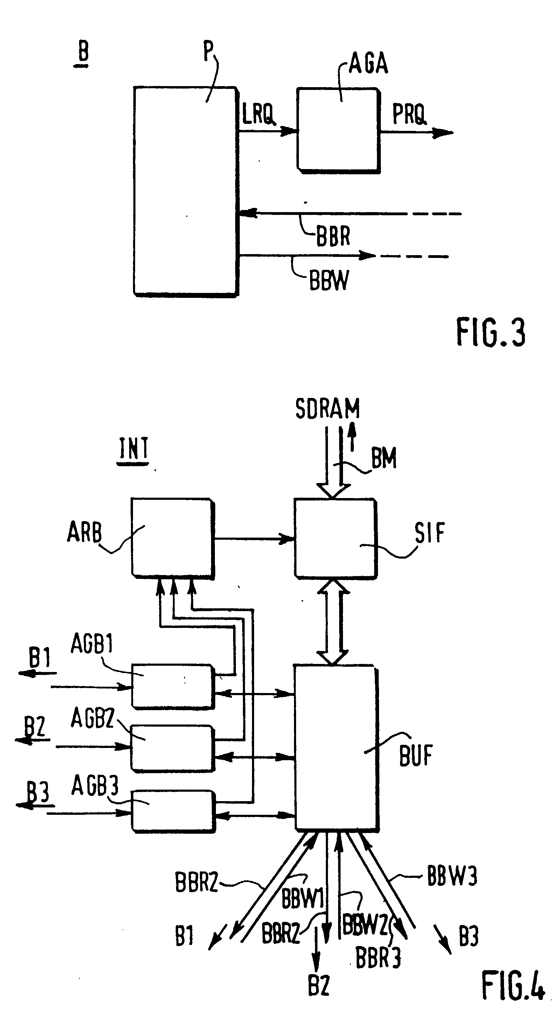

La Figure 1 illustre un dispositif de traitement de données. Le dispositif comprend une mémoire collective SDRAM, une interface mémoire INT et trois blocs de traitement de données B1, B2 et B3. Ces derniers seront nommés "bloc" dans le suivant. Chaque bloc B est relié à l'interface mémoire INT via un bus de lecture privé BBR et un bus d'écriture privé BBW. Chaque bus de lecture privé BBR et chaque bus d'écriture privé BBW est dédié à un certain bloc B. L'interface mémoire INT est reliée à la mémoire collective SDRAM via un bus collectif BM. Les blocs B, les bus de lecture privé BBR, les bus d'écriture privé BBW et l'interface mémoire INT peuvent faire partie d'un seul circuit intégré tandis que la mémoire collective SDRAM est un circuit externe.

Le dispositif de traitement de données fonctionne globalement comme suit. Les blocs B reçoivent sur demande des données à traiter stockées dans la mémoire collective SDRAM. Après avoir traité ces données, les blocs B envoient les données traitées vers la mémoire collective SDRAM via l'interface mémoire INT. L'interface mémoire INT régularise l'accès à la mémoire collective SDRAM par les différents blocs B.

L'interface mémoire INT a deux fonctions de base. Premièrement, elle effectue un arbitrage entre les différents blocs B au niveau d'accès à la mémoire collective SDRAM. Un seul bloc B peut accéder à la mémoire collective SDRAM à la fois, soit en écriture soit en lecture. Ceci implique qu'un bloc B ne peut accéder à la mémoire qu'en rafale (en anglais: burst). Deuxièmement, en cas de lecture, l'interface mémoire INT transforme les rafales de données provenant de la mémoire collective SDRAM et destinées pour un certain bloc B, en flux de données sensiblement régulier. Ce flux de données est ainsi transféré via le bus de lecture privé BBR concerné vers le bloc B. En cas d'écriture, l'interface mémoire INT transforme un flux de données sensiblement régulier provenant d'un certain bloc B en rafales de données pour écriture dans la mémoire collective SDRAM.

La Figure 2 illustre le fonctionnement de l'interface mémoire INT. T(BM) représente un trafic de données sur le bus collectif BM entre la mémoire collective SDRAM et l'interface mémoire INT. T(BBR1), T(BBR2) et T(BBR3) représentent respectivement des trafics de données sur les bus de lecture privés BBR1, BBR2 et BBR3 entre l'interface mémoire INT et les blocs B1, B2 et B3. T(BBW1), T(BBW2) et T(BBW3) représentent respectivement des trafics de données sur les bus d'écriture privés BBW1, BBW2 et BBW3 entre l'interface mémoire INT et les blocs B1, B2 et B3.

Le trafic de données T(BM) est composé de rafales de données DB. Chaque rafale de données DB correspond à un accès de la mémoire collective SDRAM par un bloc B soit en écriture soit en lecture. Les références entre parenthèses qui suivent DB indiquent à quel bloc B les données dans la rafale appartiennent et, en plus, le type d'accès: écriture (W) ou lecture (R). Par exemple, DB1(B1/R) indique que la rafale de données DB1 concerne un accès en lecture à la mémoire collective SDRAM par B1.

La Figure 2 illustre que l'interface mémoire INT effectue un "lissage" des rafales de données provenant de la mémoire collective SDRAM et appartenant à un certain bloc B. Cette Figure illustre également qu'inversement l'interface mémoire INT concentre dans le temps des données provenant d'un bloc B pour écrire ces données dans la mémoire collective SDRAM en rafale (compactage de données). Donc, les trafics de données via les bus de lecture privés BBR et les bus d'écriture privés BBW ont des débits relativement faibles. Par conséquent, ceci permet aux bus de lecture privés BBR et aux bus d'écriture privés BBW d'avoir des bandes passantes relativement faibles et, de ce fait, ceci permet à ces bus d'avoir une largeur relativement modeste. A cet égard il faut noter que la taille d'un bus ne doit pas nécessairement correspondre au nombre de bits contenus dans les données transférées par ce bus. Par exemple, une donnée comprenant 16 bits se laisse découper en mots de 4 bits. Ainsi on peut transférer cette donnée via un bus d'une taille de 4 bits sous forme d'une succession de 4 mots.

La Figure 3 illustre un bloc B. Le bloc B comprend un processeur P et un circuit d'adressage global AGA. Le processeur P fait des requêtes logiques LRQ. Supposant que le bloc B traite des données vidéo, une requête logique LRQ peut-être par exemple une demande de pixels d'une certaine ligne dans l'image courante. Le circuit d'adressage global AGA transforme la requête logique LRQ en requête physique PRQ. La requête physique PRQ définit les adresses physiques dans la mémoire collective SDRAM sous lesquelles les données demandées sont stockées. Les requêtes physiques PRQ peuvent avoir la forme suivante: une adresse de départ, un nombre d'adresses à aller chercher à partir de cette adresse et éventuellement un schéma à appliquer lors de la recherche des données. Le schéma peut être défini sous forme de: nombre d'adresses consécutives à lire, nombre d'adresses à sauter et nombre d'itérations "lire et sauter". L'AGA peut être programmable de telle façon que des paramètres de traduction définissent les traductions des requêtes logiques LRQ en requêtes physiques PRQ. Ceci permet une flexibilité de stockage des données dans la mémoire collective SDRAM.

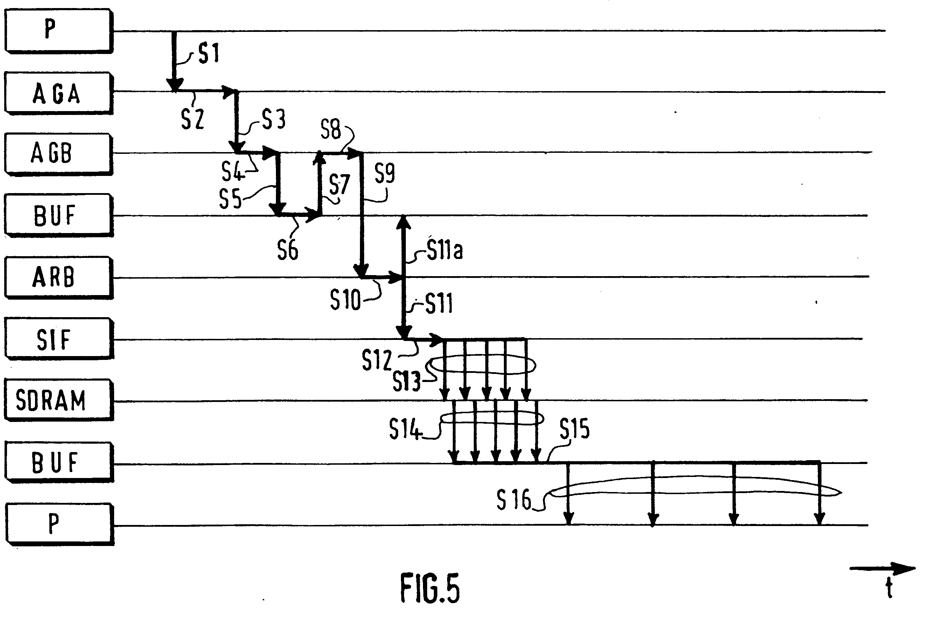

La Figure 4 illustre l'interface mémoire INT. L'interface mémoire INT comprend un arbitre ARB, une interface d'accès SIF, un dispositif de mémoire tampon BUF et des circuits d'adressage en macro-commandes AGB. Il y a un circuit d'adressage en macro-commandes AGB pour chaque bloc B.

Le fonctionnement interne de l'interface mémoire INT est globalement comme suit. Chaque circuit d'adressage en macro-commandes AGB découpe une requête physique du bloc B auquel il est associé en macro-commandes. Une macro-commande représente une requête d'accès d'une certaine ligne dans la mémoire. Avant qu'une macro-commande soit soumise à l'arbitre ARB, le circuit d'adressage en macro-commandes AGB vérifie s'il y a suffisamment de place dans le dispositif de mémoire tampon BUF. A cet effet, il soumet d'abord la macro-commande au dispositif de mémoire tampon BUF. Si le dispositif de mémoire tampon BUF confirme qu'il y a de la place pour stocker le nombre de données défini par la macro-commande, le circuit d'adressage en macro-commandes AGB soumet la macro-commande à l'arbitre ARB. L'arbitre ARB recueille les macro-commandes provenant des différents circuits d'adressage en macro-commandes AGB et sélectionne une macro-commande pour envoi à l'interface d'accès SIF. Cette sélection se fait selon un schéma d'arbitrage qui est décrite ci-après. L'interface d'accès SIF traite les macro-commandes provenant de l'arbitre ARB dans l'ordre de leur réception. Ainsi, l'interface d'accès SIF effectue des accès à la mémoire collective SDRAM, les accès étant définis par la macro-commande en cours de traitement.

Une macro-commande permet d'accéder à X groupes d'adresses, chaque groupe contenant Y adresses, les groupes d'adresses étant séparés les un des autres de Z mots, X, Y et Z étant des entiers. Une macro-commande contient donc les informations suivantes:
- première adresse à accéder;
- nombre d'adresses à accéder consécutivement à la première adresse dans un groupe d'adresses (Y-1);
- nombre d'adresses à sauter entre deux groupes d'adresses consécutifs (Z);
- nombre de groupes d'adresses à accéder en plus du premier groupe (X-1);
- type d'accès: lecture ou écriture.

Un exemple d'une macro-commande au niveau du bit se fait comme suit. On suppose que les données stockées dans la mémoire collective SDRAM sont de 32 bits de large et la mémoire collective SDRAM a une taille maximale de 256 Mbits. Ceci implique qu'une adresse s'exprime sur 23 bits. On suppose de plus que les accès sont limites à une taille maximale de 16 adresses. Une telle limite est préférable du point de vue de latence. Donc X-1 et Y-1 valent 15 au maximum et, par conséquent, peuvent être codé sur 4 bits. Enfin, une ligne contient au maximum 512 adresses suivant la configuration de la mémoire collective SDRAM. Par conséquent, le nombre d'adresses à sauter ne peut excéder 511 et donc ce nombre peut être codé sur 9 bits. Les macro-commandes ont donc une taille de 23+2x4+9+1=41 bits. L'adresse peut être codée sur les bits 40 à 18, le type d'accès sur le bit 17, le nombre de mots à lire (Y-1) sur les bits 16 à 13, le nombre de mots à sauter (Z) sur les bits 12 à 4, et le nombre de groupes de mots (X-1) sur les bits 3 à 0.

La Figure 5 illustre une procédure d'accès à la mémoire collective SDRAM en lecture par un certain bloc B. La dimension horizontale représente le temps. La dimension verticale de ce diagramme représente les différents éléments fonctionnels qui entrent en jeu. Le diagramme contient des flèches. Ces flèches représentent des différentes étapes S dans la procédure d'accès à la mémoire d'interface SRAM.
S1 = Le processeur P du bloc B concerné soumet une requête logique LRQ au circuit d'adressage global AGA. La requête logique LRQ spécifie un sous-ensemble de données, par exemple, les pixels de luminance d'une ligne, dans un ensemble de données à traiter, par exemple une image.
S2 = Le circuit d'adressage global AGA transforme la requête logique LRQ en requête physique PRQ.
S3 = Le circuit d'adressage global AGA soumet la requête physique PRQ au circuit d'adressage en macro-commandes AGB.
S4 = Le circuit d'adressage en macro-commandes AGB transforme la requête physique PRQ en macro-commandes.
S5 = Le circuit d'adressage en macro-commandes AGB soumet la première des macro-commandes dérivées de la requête physique PRQ au dispositif de mémoire tampon BUF.
S6 = Le dispositif de mémoire tampon BUF vérifie s'il y a de la place pour stocker le nombre de données spécifiées par la macro-commande.
S7 = Le dispositif de mémoire tampon BUF confirme au circuit d'adressage en macro-commandes AGB qu'il y a de la place (en anglais: acknowledge).
S8 = Représente un certain délai.
S9 = Le circuit d'adressage en macro-commandes AGB soumet la macro-commande à l'arbitre ARB.
S10 = L'arbitre ARB traite la macro-commande en tant que demande d'accès à la mémoire collective SDRAM selon un schéma d'arbitrage valable pour tous les accès des blocs à la mémoire collective SDRAM (en lecture et en écriture)
S11 = L'arbitre ARB soumet la macro-commande à l'interface d'accès SIF
S11a = L'arbitre ARB signale au dispositif de mémoire tampon BUF que la macro-commande a été soumise à l'interface d'accès SIF (en anglais: acknowledge).
S12= La macro-commande est en attente dans l'interface d'accès SIF qui traite d'abord les macro-commandes précédemment reçues.
S13 = L'interface d'accès SIF génère des signaux de contrôle pour la mémoire collective SDRAM à la base de la macro-commande. Ces signaux de contrôle ont pour effet que les données sous les adresses spécifiées par la macro-commande sont successivement lues.
S14 = Les données successivement lues de la mémoire collective SDRAM sont transférées au dispositif de mémoire tampon BUF.
S15 = Les données sont stockées temporairement dans le dispositif de mémoire tampon BUF.
S16 = Le dispositif de mémoire tampon BUF transfère les données au processeur P d'une façon sensiblement régulière.

Les étapes S5-S15 sont répétées pour chaque macro-commande suite à la requête logique LRQ faite à l'étape S1.

Les étapes suivantes ne sont pas représentées dans la Figure 5. Suite à l'étape S1, le circuit d'adressage global AGA envoie un signal de confirmation (en anglais: acknowledge) au processeur P. Ce signal indique que la requête logique LRQ a été acceptée et sera traitée. En réponse au signal de confirmation, le processeur P fait une nouvelle requête logique et la maintient jusqu'à nouvel ordre. Quand le circuit d'adressage en macro-commandes AGB soumet la dernière macro-commande suite à la requête logique LRQ, le traitement de la requête logique LRQ est achevé. Dans ce cas, le circuit d'adressage en macro-commandes AGB envoie un signal de confirmation (en anglais: acknowledge) au circuit d'adressage global AGA signalant au dernier que le traitement de la requête logique LRQ est achevé. En réponse, le circuit d'adressage global AGA commencera le traitement de la nouvelle requête logique LRQ d'une façon similaire au traitement de la requête logique LRQ faite dans l'étape Si. Autrement dit, l'histoire se répète.

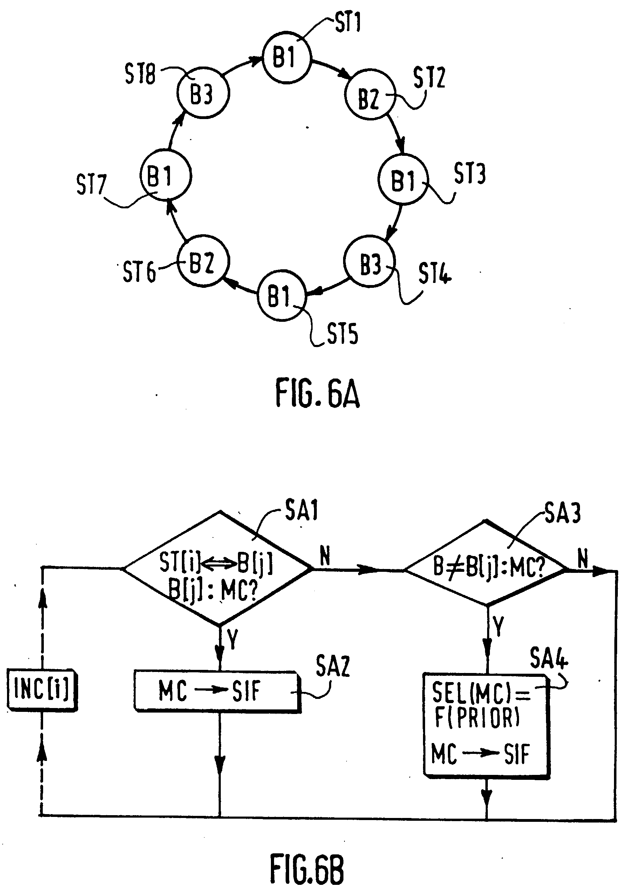

Les Figures 6a et 6b illustrent un schéma d'arbitrage pour l'arbitre ARB. La Figure 6a représente huit états ST1-ST8 sous forme de cercles. Ces états ST se produisent l'un après l'autre et d'une façon cyclique. Chaque état ST représente une possibilité d'envoi d'une macro-commande à l'interface d'accès SIF. Donc, chaque état représente une possibilité d'un accès mémoire. Chaque état appartient à un certain processeur P. Le processeur P auquel appartient un certain état figure dans le cercle représentant l'état.

La Figure 6b représente le procédé d'arbitrage associé à la Figure 6a. Ce procédé comprend plusieurs étapes SA1-SA4 et est effectué pour chaque état ST dans la Figure 6a. L'étape SA1 est la première étape effectuée après un saut d'état. Dans l'étape SA1 l'arbitre ARB vérifie si une macro-commande soumise par circuit d'adressage en macro-commandes AGB et suite à une requête logique LRQ du processeur P[j] auquel appartient l'état S[i], est en attente. Si une telle macro-commande est en attente, l'étape SA2 suit l'étape SA1. Dans l'étape SA2, l'arbitre ARB envoie la macro-commande concernée à l'interface d'accès SIF. Ceci aura pour effet qu'après un certain délai, un accès de la mémoire collective SDRAM pour le processeur P concerné sera effectué tel que défini par la macro-commande. Après l'envoi de la macro-commande, l'arbitre ARB saute vers l'état suivant ce qui implique que le procédé représenté par la Figure 6b se répète.

Si, par contre, l'arbitre ARB constate dans l'étape S1 qu'il n'y a pas en attente une macro-commande liée au processeur P auquel appartient l'état S[i], l'étape SA3 suit l'étape SA1. Dans l'étape SA3 l'arbitre ARB vérifie si d'autres macro-commandes sont en attente. S'il n'y a pas d'autres macro-commandes en attente, l'arbitre ARB saute vers l'état suivant et le procédé représenté par la Figure 6b se répète. S'il y a d'autres macro-commandes en attente, l'arbitre ARB effectue l'étape SA4. Dans l'étape SA4, l'arbitre ARB sélectionne une macro-commande selon un schéma de priorité. Chaque macro-commande a un certain niveau de priorité. Le niveau de priorité est déterminé par le processeur P qui est à l'origine de la macro-commande. L'arbitre ARB sélectionne donc la macro-commande ayant le niveau de priorité le plus élevé et envoie cette macro-commande à l'interface d'accès SIF. Après l'envoi de la macro-commande, l'arbitre ARB saute vers l'état suivant ce qui implique que le procédé représenté par la Figure 6b se répète.

A l'égard des Figures 6a et 6b il faut noter qu'il n'est pas nécessaire que chaque état appartienne à un processeur P. On pourrait introduire un ou plusieurs états n'appartenant à aucun processeur P, ce qui dire qu l'on pourrait introduire des états libres. Dans le cas d'un état libre, l'arbitre ARB sélectionne une macro-commande qu'à la base du schéma de priorité. Un état libre peut être utile dans le cas où le dispositif de traitement de données contiendrait un processeur P dont les contraintes en termes de temps de latence et de bande passante au niveau de l'accès à la mémoire collective SDRAM, sont relativement peu sévères. Dans ce cas, il serait préférable de ne pas attribuer un état à ce processeur P. Pour éviter que ce processeur P souffre d'une pénurie d'accès, on pourra donc introduire des états libres. Le processeur P pourra profiter de ces états libres pour accéder à la mémoire collective SDRAM.

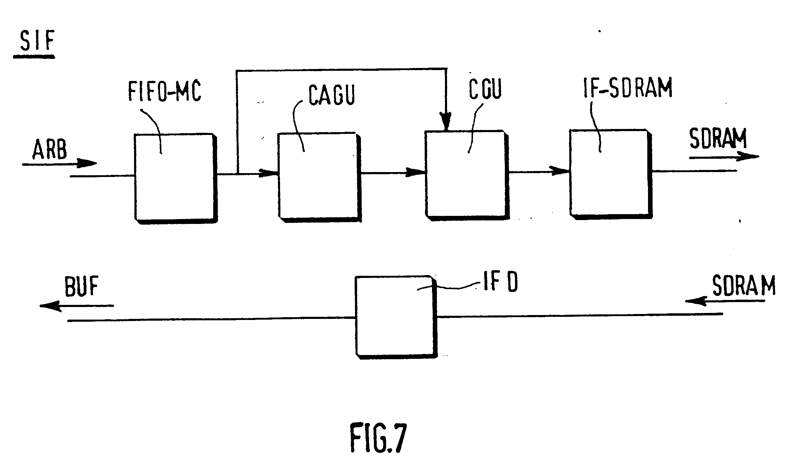

La Figure 7 illustre un exemple de l'interface d'accès SIF. L'interface d'accès SIF comprend une mémoire tampon de macro-commandes FIFO_MC, un générateur de colonnes CAGU, un générateur de commandes CGU, un générateur de signaux de contrôle IF_SDRAM, une mémoire tampon de données IF_D.

L'interface d'accès SIF fonctionne globalement comme suit. La mémoire tampon de macro-commandes FIFO_MC reçoit les macro-commandes provenant de l'arbitre ARB. Cette mémoire les stocke temporairement et envoie ces macro-commandes vers le générateur de colonnes CAGU dans l'ordre de leur arrivé. Dans le cas où la mémoire tampon de macro-commandes FIFO_MC serait pleine, et donc ne peut pas accepter une nouvelle macro-commande, elle signale ceci à l'arbitre ARB. Ce signal de l'interface d'accès SIF disant "ma FIFO est pleine" a pour effet que l'arbitre ARB attend d'envoyer la macro-commande couramment sélectionnée jusqu'au moment où la mémoire tampon de macro-commandes FIFO_MC signale qu'elle peut accepter une nouvelle macro-commande. En effet, le signal de l'interface d'accès SIF disant "ma FIFO est pleine" gèle l'arbitre ARB pour un certain temps.

Le générateur de colonnes CAGU demande une nouvelle macro-commande de la mémoire tampon de macro-commandes FIFO_MC quand les accès mémoires selon la macro-commande précédente ont été effectués. Le générateur de colonnes CAGU en combinaison avec le générateur de commandes CGU traduisent, en effet, la macro-commande en une série d'adresses. Une adresse de la mémoire collective SDRAM est définie par le numéro d'un banc (en anglais: bank) de la mémoire collective SDRAM, le numéro d'une ligne et le numéro d'une colonne. Il a déjà été mentionné qu'une macro-commande concerne un accès d'une seule ligne de la mémoire d'interface SRAM ce qui implique automatiquement que l'accès a lieu dans un seul banc. Donc, il suffit que le générateur de colonnes CAGU génère une série de colonnes à la base de la macro-commande pour définir une série d'adresses conformément à la macro-commande. Une implémentation du générateur de colonnes CAGU peut, par exemple, comprendre quelques compteurs et quelques circuits logiques. Dans une telle implémentation, le contenu d'une macro-commande sert à programmer les compteurs.

Le générateur de commandes CGU reçoit successivement un autre numéro de colonne de la mémoire collective SDRAM. Le générateur de commandes CGU reçoit en outre de la mémoire tampon de macro-commandes FIFO_MC le numéro du banc et le numéro de la ligne des adresses telles que définies par la macro-commande. Ces informations permettent au générateur de colonnes CAGU de définir une succession de commandes d'accès à la mémoire collective SDRAM, chaque commande définissant une seule adresse. En outre le générateur de commandes CGU génère des commandes nécessaires pour mettre la mémoire collective SDRAM dans un bon état pour permettre des accès tels que définis par les macro-commandes. Ces commandes concernent des procédés propres à la mémoire collective SDRAM tel que pré-charge et activation. En outre, le générateur de commandes CGU fait en sorte que la mémoire collective SDRAM est régulièrement rafraîchie et génère les commandes nécessaires pour effectuer ces rafraîchissements.

Le générateur de signaux de contrôle IF_SDRAM génère des signaux de contrôle à la base des commandes reçues du générateur de commandes CGU. Par exemple, le générateur de signaux de contrôle IF_SDRAM génère des signaux connus sous les abréviations RAS, CAS. Le générateur de signaux de contrôle IF_SDRAM fait en sorte que dans une suite de signaux de contrôle, certains délais propres à la mémoire collective SDRAM soient respectés. Ces délais peuvent varier en fonction du type de la mémoire collective SDRAM utilisée. Donc, le générateur de signaux de contrôle IF_SDRAM est spécifique pour le type de la mémoire collective SDRAM utilise. Si on désire utiliser une mémoire collective SDRAM d'un autre type il suffirait de modifier, voire reprogrammer, le générateur de signaux de contrôle IF_SDRAM. Les autres éléments de l'interface d'accès ne nécessiteraient en principe pas de modifications.

La mémoire tampon de données IF_D sert, en cas de lecture, à transférer les données de la mémoire collective SDRAM au dispositif de mémoire tampon BUF illustré dans la Figure 4 et, en cas d'écriture, à transférer les données du dispositif de mémoire tampon BUF vers la mémoire collective SDRAM. Pour cela, la mémoire tampon de données IF_D effectue une synchronisation des données provenant de la mémoire collective SDRAM (lecture) et des données appliquées à la mémoire collective SDRAM (écriture). En outre, la mémoire tampon de données IF_D constitue une FIFO ayant une profondeur d'une unité. Cela veut dire que si un certain coup d'horloge fait qu'une donnée de la mémoire collective SDRAM est lue, cette donnée sera transférée vers le dispositif de mémoire tampon BUF au coup d'horloge suivant. L'inverse s'applique en cas d'écriture.

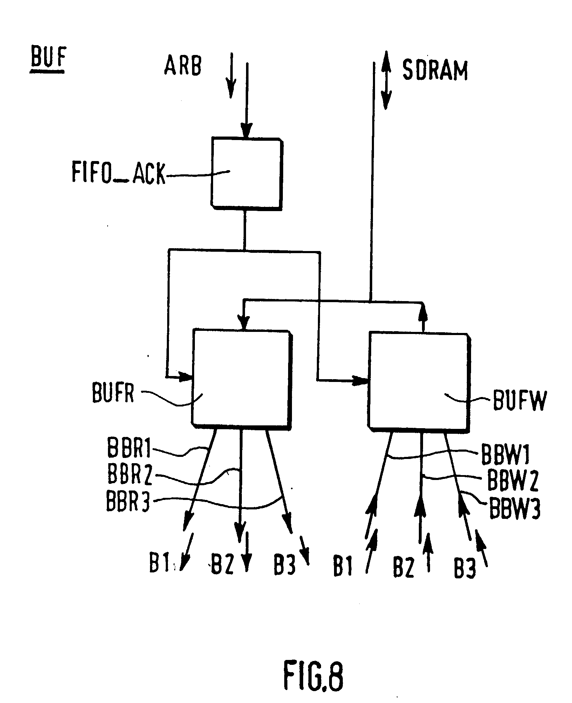

La Figure 8 illustre un exemple du dispositif de mémoire tampon BUF faisant partie de l'interface mémoire INT illustrée dans la Figure 4. Le dispositif de mémoire tampon BUF comprend un dispositif de mémoire tampon pour lecture BUFR, ainsi qu'un dispositif de mémoire tampon pour écriture BUFW et une mémoire tampon pour signaux de confirmation FIFO_ACK. Le dispositif de mémoire tampon pour lecture BUFR et le dispositif de mémoire tampon pour écriture BUFW sont reliés à la mémoire collective SDRAM via l'interface d'accès SIF et le bus collectif BM tel qu'illustré dans la Figure 1. Le dispositif de mémoire tampon pour lecture BUFR est relié aux blocs B1, B2 et B3 par respectivement les bus de lecture privés BBR1, BBR2 et BBR3. Le dispositif de mémoire tampon pour écriture BUFW est relié aux blocs B1, B2 et B3 par respectivement les bus d'écriture privés BBW1, BBW2 et BBW3. La mémoire tampon pour signaux de confirmation FIFO_ACK est reliée à l'arbitre ARB.

Le dispositif de mémoire tampon BUF fonctionne globalement comme suit. Le dispositif de mémoire tampon pour lecture BUFR stocke temporairement les données provenant de la mémoire collective SDRAM, tandis que le dispositif de mémoire tampon pour écriture BUFW stocke les données provenant des différents blocs B et à écrire dans la mémoire collective SDRAM. La mémoire tampon pour signaux de confirmation FIFO_ACK reçoit les signaux de confirmation provenant de l'arbitre ARB. Un tel signal indique que l'arbitre ARB a envoyé une macro-commande à l'interface d'accès SIF.

La mémoire tampon pour signaux de confirmation FIFO_ACK a la même profondeur que la mémoire tampon de macro-commandes FIFO_MC de l'interface d'accès SIF illustrée dans la Figure 7. Par conséquent, quand une macro-commande sort de la mémoire tampon de macro-commandes FIFO_MC, ce qui a pour effet qu'un accès mémoire se déroule selon la macro-commande, le signal de confirmation correspondant à cette macro-commande sort de la mémoire tampon pour signaux de confirmation FIFO_ACK. Ce signal indique si l'accès concerné est un accès en lecture ou un accès en écriture. Dans le premier cas, le dispositif de mémoire tampon pour lecture BUFR sera activé pour recevoir des données depuis la mémoire collective SDRAM, tandis que dans le dernier cas le dispositif de mémoire tampon pour écriture BUFW sera activé pour envoyer des données vers la mémoire collective SDRAM. Le signal de confirmation fourni par la mémoire tampon pour signaux de confirmation FIFO_ACK indique en outre le nombre de données impliqué dans l'accès tel que défini par la macro-commande. Cette indication sert au dispositif de mémoire tampon BUF pour faire la gestion interne "où stocker les données ou d'où prendre les données?" respectivement en cas de lecture ou écriture.

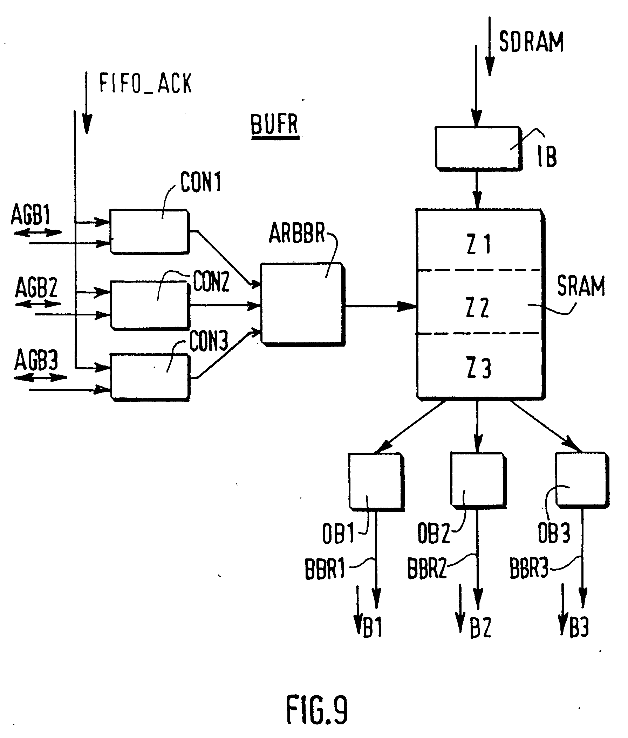

La Figure 9 illustre un exemple du dispositif de mémoire tampon pour lecture BUFR. Le dispositif de mémoire tampon pour lecture BUFR comprend une mémoire tampon d'entrée IB, une mémoire d'interface SRAM, un ensemble de plusieurs mémoires tampon de sortie OB, un ensemble de circuits de contrôle CON et un arbitre d'accès à la mémoire d'interface ARBBR. La mémoire tampon d'entrée IB est relie à la mémoire collective SDRAM via l'interface d'accès SIF déjà montré dans la Figure 4. Les mémoires tampon de sortie OB1,OB2 et OB3 sont respectivement reliées aux processeurs P1, P2 et P3 via les bus de lecture privés BBR1, BBR2 et BBR3, ces derniers éléments étant montrés dans les Figures 2 et 3. Les circuits de contrôle CON1,CON2 et CON3 sont respectivement reliées aux circuits d'adressage en macro-commandes AGB1, au circuit d'adressage en macro-commandes AGB2 et au circuit d'adressage en macro-commandes AGB3, ainsi qu'à l'interface d'accès SIF.

Le dispositif de mémoire tampon pour lecture BUFR fonctionne comme suit. Les données reçues depuis la mémoire collective SDRAM ont une largeur de N bits, N étant un entier, et arrivent à une fréquence F. La mémoire d'interface SRAM a une largeur de 2N bits, une adresse peut donc contenir 2N bits, et fonctionne à la fréquence F. La mémoire tampon d'entrée IB forme des couples de deux données consécutives provenant de la mémoire collective SDRAM, et écrit ces couples dans la mémoire d'interface SRAM. Il faut deux cycles d'horloge pour former un couple. En supposant que toutes les données successives reçues depuis la mémoire collective SDRAM puissent se mettre en couple, un accès en écriture à la mémoire d'interface SRAM aura lieu tous les deux cycles d'horloge. Un accès à une seule adresse ne prend qu'un seul cycle d'horloge. Donc, entre deux accès en écriture on dispose d'un cycle d'horloge pour accéder à la mémoire d'interface SRAM en lecture à fin de transférer les données lues de la mémoire collective SDRAM vers les blocs B. Donc, en principe, les accès à la mémoire d'interface SRAM en écriture et les accès en lecture peuvent avoir lieu en alternance et un par un. L'accès à la mémoire d'interface SRAM sera expliqué plus en détail dans la suite.

La mémoire d'interface SRAM est en effet découpée en trois zones Z1, Z2 et Z3. Les zones Z1, Z2 et Z3 contiennent respectivement les données destinées pour les processeurs P1, P2 et P3. Les données provenant de la mémoire collective SDRAM sont écrites par l'intermédiaire de la mémoire tampon d'entrée IB dans la zone Z1, Z2 ou Z3 en fonction du processeur P qui est à l'origine de la macro-commande en cours. Les données contenues dans les zones Z1, Z2 et Z3 sont respectivement transférées dans les mémoires tampon de sortie OB1, OB2 et OB3 d'une façon sensiblement régulière et selon un schéma plus ou moins fixe. Une mémoire tampon de sortie OB découpe, en effet, une donnée en plusieurs morceaux et envoie la donnée au processeur P concerné, morceau par morceau. Par exemple, une mémoire tampon de sortie OB peut découper une donnée de 16 bits en 4 morceaux de 4 bits. Donc, au lieu d'envoyer la donnée dans un seul coup d'horloge, ce qui nécessite un bus d'une taille de 16 bits, on envoie la donnée morceau par morceau en 4 coups d'horloge ce qui nécessite un bus d'une taille de 4 bits seulement.

Les circuits de contrôle CON1, CON2 et CON3 gèrent respectivement les zones Z1, Z2 et Z3. A cet effet, chaque circuit de contrôle CON gère un ensemble de paramètres. Ces paramètres comprennent un pointeur d'écriture, un pointeur de lecture et une valeur de remplissage de la zone. Le pointeur d'écriture définit l'adresse dans laquelle une donnée provenant de la mémoire collective SDRAM sera écrite. Le pointeur de lecture définit l'adresse de la donnée devant être transférée vers la mémoire tampon de sortie OB concernée. La valeur de remplissage indique le nombre d'adresses encore disponibles pour stocker des données provenant de la mémoire collective SDRAM. Les circuits de contrôle CON1, CON2 et CON3 gèrent aussi respectivement les mémoires tampons de sortie OB1, OB2 et OB3. Pour cela chaque circuit de contrôle CON gère un paramètre représentant l'état de remplissage de l'OB qui lui appartient.

La gestion effectuée par un circuit de contrôle CON sera maintenant décrite en supposant qu'un accès à la mémoire collective SDRAM a lieu tel qu'illustré dans la Figure 5. Dans l'étape S5, le circuit d'adressage en macro-commandes AGB soumet une macro-commande au dispositif de mémoire tampon BUF. Cette macro-commande est traitée par le circuit de contrôle CON appartenant au processeur P qui était à l'origine de la macro-commande. Le circuit de contrôle CON compare le nombre de données défini par la macro-commande avec la valeur de remplissage. Ainsi, le circuit de contrôle CON vérifie s'il y a suffisamment de place dans la zone Z concernée pour stocker les données voulues. S'il y a suffisamment de place, le circuit de contrôle CON le signale au circuit d'adressage en macro-commandes AGB et, en plus, met à jour le paramètre de remplissage. Ceci veut dire qu'il considère que les données sont déjà stockées dans la zone concernée tandis que ceci doit encore se produire. La mise à jour du paramètre de remplissage peut donc être considérée comme une réservation dans la zone concernée.

Ce qui se passe pendant l'étape S12 tel qu'illustré dans la Figure 5 va maintenant être décrit. Cette étape S12 représente une lecture de la mémoire collective SDRAM selon la macro-commande concernée. Il a déjà été expliqué qu'au moment où l'interface d'accès SIF commence à traiter la macro-commande et donc commence à faire la lecture, le signal de confirmation associé à la macro-commande concernée sort de la mémoire tampon pour signaux de confirmation FIFO_ACK illustré dans la Figure 7. Ce signal de confirmation indique qu'il s'agit d'un accès en écriture et, en plus, ce signal indique le processeur P qui était à l'origine de la macro-commande. Ainsi, le circuit de contrôle CON appartenant à ce processeur P sait qu'il doit fournir les adresses sous lesquelles les données doivent être stockées dans la mémoire collective SDRAM. En plus, le circuit de contrôle CON reçoit une indication du nombre de données impliqué dans l'accès selon la macro-commande, cette indication faisant partie du signal de confirmation.

Après chaque écriture d'un couple de données provenant de la mémoire collective SDRAM dans la zone Z concernée, le circuit de contrôle CON incrémente le pointeur d'écriture. En plus, il met à jour la valeur de remplissage. Le circuit de contrôle CON continue à faire ceci jusqu'à ce que l'accès en lecture de la mémoire collective SDRAM tel que défini par la macro-commande ait été achevé. Le circuit de contrôle CON détecte la fin de l'accès grâce au nombre de données impliqué dans l'accès, ce nombre lui étant indiqué par le signal de confirmation, et une comptabilisation des données écrites dans la mémoire d'interface SRAM.

Après chaque lecture d'un couple de données d'une certaine zone Z, le circuit de contrôle CON qui gère cette zone incrémente le pointeur de lecture. En plus, il met à jour la valeur de remplissage.

L'arbitre d'accès à la mémoire d'interface ARBBR gère l'accès à la mémoire d'interface SRAM. Il y a différents types d'accès: (1) accès par l'interface d'accès SIF pour écrire des données provenant de la mémoire collective SDRAM dans la mémoire d'interface SRAM, (2) des accès par la mémoire tampon de sortie OB1, (3) des accès par la mémoire tampon de sortie OB2 et (4) des accès par la mémoire tampon de sortie OB3. Ces trois derniers accès servent à transférer des données contenues dans la mémoire d'interface SRAM respectivement vers les processeurs P1, P2 et P3.

Chaque accès à la mémoire d'interface SRAM se fait suite à une requête soumise à l'arbitre d'accès à la mémoire d'interface ARBBR. L'arbitre d'accès à la mémoire d'interface ARBBR sélectionne parmi les requêtes en cours, la requête ayant la priorité la plus élevée. Les requêtes pour accès en écriture (accès par l'interface d'accès SIF) ont la priorité maximale. Grâce au fait qu'on écrit des couples de données comme expliqué dans ce qui précède, une telle requête ne se produit en général qu'une fois tous les deux cycles d'horloge. Une écriture ne prend qu'un cycle d'horloge. Donc, il y aura suffisamment d'opportunités pour accéder à la mémoire d'interface SRAM en lecture afin de transférer les données vers les différents processeurs P.

Les requêtes d'accès en lecture par une certaine mémoire tampon de sortie OB se font en fonction de la taille du bus de lecture privé BBR entre la mémoire tampon de sortie OB et le bloc B. Par exemple, supposons que la taille du bus est N/2 bits. Ceci implique qu'on peut transférer un morceau de N/2 bits de la mémoire tampon de sortie OB vers le bloc B à chaque cycle d'horloge. Une lecture de la mémoire d'interface SRAM se fait par couple de données. Un couple de données comprend 2N bits. Il faut donc 4 cycles d'horloge pour envoyer un couple de données vers le bloc B. Le transfert d'un couple de données implique une requête d'accès à la mémoire d'interface SRAM en lecture. Donc, selon l'exemple, l'OB fera une requête d'accès tous les 4 cycles d'horloge. Cet exemple montre que les largeurs des bus vers les blocs B conditionne la fréquence des requêtes d'accès des diverses mémoires tampon de sortie OB. Si la taille du bus de lecture privé BBR égale N/4 bit, il y a une requête d'accès tous les 8 cycles d'horloge.

La description suivante concerne un exemple d'arbitrage de l'accès à la mémoire d'interface SRAM. Il est supposé que la taille du bus de lecture privé BBR1 égale N/2 bits et que la taille du bus de lecture privé BBR2 et celle du bus de lecture privé BBR3 égale N/4 bits. Les accès de l'interface d'accès SIF sont les plus prioritaires, viennent ensuite les accès des mémoires tampon de sortie OB1, OB2, et OB3 dans l'ordre de priorité. Finalement, il est supposé que tout les types d'accès (SIF, OB1, OB2,OB3) fassent une requête en même temps dans le premier cycle d'horloge.
Cycle 1: tout le monde fait sa requête en même temps; requêtes en cours: l'interface d'accès SIF, les mémoires tampon de sortie OB1, OB2, et OB3.
Cycle 2: l'interface d'accès SIF étant la plus prioritaire, a la main et baisse sa requête; les mémoires tampon de sortie OB1, OB2 et OB3 maintiennent leurs requêtes; requêtes en cours: les mémoires tampon de sortie OB1, OB2 et OB3.
Cycle 3: la mémoire tampon de sortie OB1, qui est la seconde dans l'ordre de priorité, a la main et baisse sa requête; l'interface d'accès SIF fait à nouveau une requête; requêtes en cours: interface d'accès SIF, les mémoires tampon de sortie OB2 et OB3.
Cycle 4: l'interface d'accès SIF étant la plus prioritaire a la main et baisse sa requête; les mémoires tampon de sortie OB2 et OB3 maintiennent leurs requêtes; requêtes en cours: les mémoires tampon de sortie OB2 et OB3.
Cycle 5: la mémoire tampon de sortie OB2, qui est la troisième dans l'ordre de priorité, a la main et baisse sa requête; l'interface d'accès SIF fait à nouveau une requête; requêtes en cours: l'interface d'accès SIF et la mémoire tampon de sortie OB3.
Cycle 6: l'interface d'accès SIF étant la plus prioritaire a la main et baisse sa requête; la mémoire tampon de sortie OB1 va épuiser son tampon et refait une requête; requêtes en cours: l'interface d'accès SIF, les mémoires tampon de sortie OB1 et OB3.
Cycle 7: la mémoire tampon de sortie OB1, qui est la seconde dans l'ordre de priorité, a la main et baisse sa requête; l'interface d'accès SIF fait à nouveau une requête; requêtes en cours: l'interface d'accès SIF, la mémoire tampon de sortie OB3.
Cycle 8: l'interface d'accès SIF étant la plus prioritaire a la main et baisse sa requête; la mémoire tampon de sortie OB3 maintient sa requête; requête en cours: la mémoire tampon de sortie OB3.
Cycle 9: la mémoire tampon de sortie OB3, qui est la quatrième dans l'ordre de priorité, a la main et baisse sa requête; l'interface d'accès SIF fait à nouveau une requête; requête en cours: l'interface d'accès SIF.
Cycle 10: l'interface d'accès SIF étant la plus prioritaire a la main et baisse sa requête; la mémoire tampon de sortie OB1 va épuiser son tampon et refait une requête; requête en cours: la mémoire tampon de sortie OB1.
Cycle 11: la mémoire tampon de Sortie OB1, qui est la seconde dans l'ordre de priorité, a la main et baisse sa requête; l'interface d'accès SIF fait à nouveau une requête; requête en cours: l'interface d'accès SIF.
Cycle 12: l'interface d'accès SIF étant la plus prioritaire a la main et baisse sa requête; la mémoire tampon de sortie OB2 va épuiser son tampon et refait une requête; requête en cours: la mémoire tampon de sortie OB2.
Cycle 13: la mémoire tampon de sortie OB2, qui est la troisième dans l'ordre de priorité, a la main et baisse sa requête; l'interface d'accès SIF fait à nouveau une requête; requête en cours: l'interface d'accès SIF.
Cycle 14: l'interface d'accès SIF étant la plus prioritaire a la main et baisse sa requête; la mémoire tampon de sortie OB1 va épuiser son tampon et refait une requête; requête en cours: la mémoire tampon de sortie OB1.
Cycle 15: la mémoire tampon de sortie OB1, qui est la seconde dans l'ordre de priorité, a la main et baisse sa requête; l'interface d'accès SIF fait à nouveau une requête; requête en cours: l'interface d'accès SIF.
Cycle 16: l'interface d'accès SIF étant la plus prioritaire a la main et baisse sa requête; la mémoire tampon de sortie OB3 va épuiser son tampon et refait une requête; requête en cours: la mémoire tampon de sortie OB3.
Cycle 17: la mémoire tampon de sortie OB3, qui est la quatrième dans l'ordre de priorité, a la main et baisse sa requête; l'interface d'accès SIF fait à nouveau une requête; requête en cours: l'interface d'accès SIF.
Cycle 18: l'interface d'accès SIF étant la plus prioritaire a la main et baisse sa requête; la mémoire tampon de sortie OB1 va épuiser son tampon et refait une requête; requête en cours: la mémoire tampon de sortie OB1.
Cycle 19: la mémoire tampon de sortie OB1, qui est la seconde dans l'ordre de priorité, a la main et baisse sa requête; l'interface d'accès SIF fait à nouveau une requête; requête en cours: l'interface d'accès SIF.
Cycle 20: l'interface d'accès SIF étant la plus prioritaire a la main et baisse sa requête; la mémoire tampon de sortie OB2 va épuiser son tampon et refait une requête; requête en cours: la mémoire tampon de sortie OB2.
Cycle 21: la mémoire tampon de sortie OB2, qui est la troisième dans l'ordre de priorité, a la main et baisse sa requête; l'interface d'accès SIF fait à nouveau une requête; requête en cours: l'interface d'accès SIF.
Cycle 22: l'interface d'accès SIF étant la plus prioritaire a la main et baisse sa requête; la mémoire tampon de sortie OB1 va épuiser son tampon et refait une requête; requête en cours: mémoire tampon de sortie OB1.
Cycle 23: la mémoire tampon de sortie OB1, qui est la seconde dans l'ordre de priorité, a la main et baisse sa requête; l'interface d'accès SIF fait à nouveau une requête; requête en cours: l'interface d'accès SIF.
Cycle 24: l'interface d'accès SIF étant la plus prioritaire a la main et baisse sa requête; la mémoire tampon de sortie OB3 va épuiser son tampon et refait une requête; requête en cours: la mémoire tampon de sortie OB3.
Cycle 25: la mémoire tampon de sortie OB3, qui est la quatrième dans l'ordre de priorité, a la main et baisse sa requête; l'interface d'accès SIF fait à nouveau une requête; requête en cours: l'interface d'accès SIF.
Cycle 26: l'interface d'accès SIF étant la plus prioritaire a la main et baisse sa requête; la mémoire tampon de sortie OB1 va épuiser son tampon et refait une requête; requête en cours: la mémoire tampon de sortie OB1.

Etc.

Les accès dans l'exemple ci-dessus ont une périodicité de 8 cycles. C'est comme si l'arbitrage était assuré par une machine circulaire à huit états. Ce résultat est dû au fait que dans l'exemple il est supposé que tous les blocs B consomment leur données d'une façon régulière. En outre, il est supposé que les requêtes d'accès par l'interface d'accès SIF se fassent d'une façon régulière une fois tous les deux cycles d'horloge. Ces suppositions ne sont pas nécessairement correctes dans la pratique. Pour cette raison, il est préférable de gérer les accès à la mémoire d'interface SRAM à l'aide d'un arbitre et d'un schéma de priorité au lieu d'une machine circulaire. L'arbitre permet une certaine flexibilité au niveau de l'accès à la mémoire d'interface SRAM et, par conséquent, il permet une meilleure utilisation de la bande passante disponible pour le transfert de données.

Ce qui suit est un exemple d'exception à la règle selon laquelle il n'y a qu'un accès en écriture à la mémoire d'interface SRAM (= accès par l'interface d'accès SIF) tous les deux cycles d'horloge. L'exception se présente lorsqu'il y a un accès à la mémoire collective SDRAM suite à une macro-commande qui implique un nombre de données impair. Toutes les données de cet accès sauf la dernière, trouvent un partenaire et ainsi forment des couples pour l'écriture dans la mémoire d'interface SRAM. La dernière donnée se trouve seule. On ne peut pas prendre la donnée qui suit pour faire un couple car cette donnée est la première donnée d'un autre accès et donc elle est destinée à un autre processeur P. Par conséquent, cette première donnée d'un autre accès doit être stockée dans une autre zone Z de la mémoire d'interface SRAM. Donc, suite à l'arrivée dans la mémoire tampon d'entrée IB de la dernière donnée de l'accès comprenant un nombre de données impair, cette donnée est écrite dans la mémoire d'interface SRAM sans partenaire dans le cycle d'horloge qui suit l'écriture du dernier couple de données compris dans l'accès. Par conséquent, il y aura deux accès d'écriture de suite sans pause d'un cycle d'horloge qui autrement permettrait un accès en lecture entre deux accès en écriture.

Les Figures 5 et 9 concernent le fonctionnement de l'interface mémoire INT en lecture. Le fonctionnement en écriture et sensiblement symétrique. Ceci implique que le dispositif de mémoire tampon pour écriture BUFW et similaire au dispositif de mémoire tampon pour lecture BUFR décrit précédemment. Donc, le dispositif de mémoire tampon pour écriture BUFW comprend une mémoire d'interface repartie en zones, chaque zone appartenant à un bloc B différent. Les blocs B peuvent envoyer des données à écrire dans la mémoire collective avant ou après la macro-commande qui indique ou ces données doivent être stockées. En effet, une zone va se remplir dès que le bloc B auquel la zone appartient envoie des données destinées à être stockées dans la mémoire collective. Ce remplissage peut, par exemple, continuer jusqu'à ce que la zone soit complètement remplie de données. Dans ce cas, l'interface mémoire INT indiquera au bloc B concerné qu'il n'y a plus de place pour stocker de nouvelles données. Ceci empêchera le bloc B d'envoyer de nouvelles données jusqu'à ce que de la place soit libérée dans la zone concernée. Un transfert de données de la zone Z vers la mémoire collective fait que de la place est libérée. Une telle vidange pourra intervenir dès qu'une macro-commande sera acceptée par l'arbitre ARB et traitée par l'interface d'accès SIF. Il est également possible qu'une macro-commande soit émise avant que le bloc B concerné ait envoyé les données. De toute façon, aucune macro-commande ne sera présentée à l'arbitre ARB tant que le dispositif de mémoire tampon pour écriture BUFW n'indiquera pas un niveau de remplissage suffisant de la zone concernée.

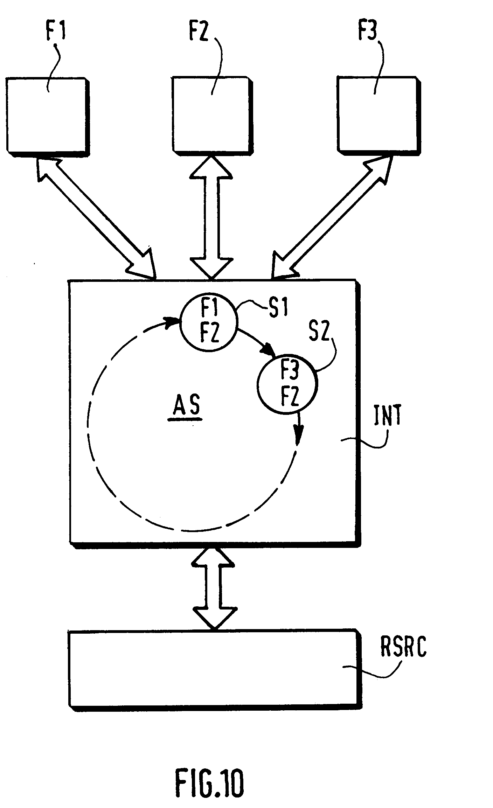

La Figure 10 illustre des caractéristiques de base de l'invention telle qu'exposée dans la partie "exposé de l'invention". Un système fonctionnel comprend un ensemble de fonctions F devant accéder à une ressource collective RSRC. Le système comprend une interface INT agencée pour mettre en oeuvre un schéma d'accès AS caractérisé par plusieurs états S parcourus d'une façon prédéterminée, un état S constituant une possibilité d'accès d'une certaine étendue et définissant un ordre de priorité selon lequel une fonction F peut accéder à la ressource collective RSRC.

Le dispositif de traitement de données décrit précédemment en référence aux Figures 1-9 est un exemple d'implémentation des caractéristiques de base illustré à la Figure 10. La ressource collective RSRC illustrée à la Figure 10 est implémentée sous la forme de la mémoire collective SDRAM illustré à la Figure 1. Les fonctions F illustrées à la Figure 10 sont implémentées sous la forme des blocs B illustrés à la Figure 1. L'interface mémoire INT illustrée à la Figure 1 implémente un procédé d'accès illustré aux Figures 6a et 6b. Ce schéma d'accès est caractérisé par une pluralité d'états ST illustrés à la Figure 6a. Chaque état ST constitue une possibilité d'accès au moyen d'une macro commande. L'étendue d'une telle possibilité d'accès est 16 adresses de mémoire. Chaque état ST illustré à la Figure 6a définit un ordre de priorité selon lequel un bloc B peut accéder à la mémoire collective SDRAM. Le bloc B dont le numéro de référence apparaît dans un cercle représentant un état ST est le plus prioritaire dans cet état.

Ce qui suit est un exemple comment l'invention peut être appliquée dans un circuit intégré comprenant un décodeur MPEG et d'autres circuits pour le traitement et l'affichage d'images. Dans un tel circuit intégré différents processus ont lieu, un processus étant l'équivalent d'une fonction. Il existe différents processus P devant accéder à une mémoire collective de type SDRAM, dénommée SDRAM dans la suite:
P1: DISP (Display)
P2: OSD (On Screen Display)
P3: BCKGND (Background)
P4: CCIR656
P5: VMIX (Video Mixer)
P6: VFW (Video FIFO Write)
P7: VFR (Video FIFO read)
P8: AUDIOFIFO (Audio FIFO Read and Write)
P9: AUDIOBUF (Audio Buffer Read and Write)
P10: MC (Motion Compensation)
P11: DMU
P12: INTERP

Le processus P1 (DISP) concerne l'affichage des images décodées. Le processus P2 (OSD) concerne l'affichage de données graphiques en surimpression sur une image décodée affichée. Le processus P3 (BCKGND) concerne l'affichage d'une image fixe en fond d'écran ou en transparence avec une image décodée et traitée. Le processus P4 (CCIR656) concerne une entrée du circuit intégré permettant de recevoir des images déjà décodées et de les stocker en mémoire. Ces images peuvent être affichées en lieu et place des images provenant du décodage MPEG au moyen du processus P1 (DISP). Le processus P5 (VMIX) concerne le mixage de trois flux de données provenant des processus P1 (DISP), P2 (OSD) et P3 (BCKGND). Le processus P6 (VFW), P7 (VFR) et P8 (AUDIOFIFO) concernent l'écriture et la lecture de données vidéo et audio codées extraites d'un flux de données MPEG au moyen d'un dispositif de désembrouillage / démultiplexage. Le processus P9 (AUDIOBUF) concerne l'écriture et la lecture de résultats intermédiaires d'un processeur audio. Le processus P10 (MC) concerne la compensation de mouvement qui constitue une étape dans le décodage MPEG vidéo. Le processus P11 (DMU) concerne un dispositif d'accélération qui sert à faire des manipulations relativement complexes sur des données dans la SDRAM comme, par exemple, un déplacement d'un ou plusieurs blocs de données ou un filtrage. Le processus P12 (INTERP) concerne la dernière partie d'un décodage MPEG qui fournit des images décodées à écrire dans la SDRAM en vue de leur affichage ou leur utilisation en tant qu'images de référence ou les deux.

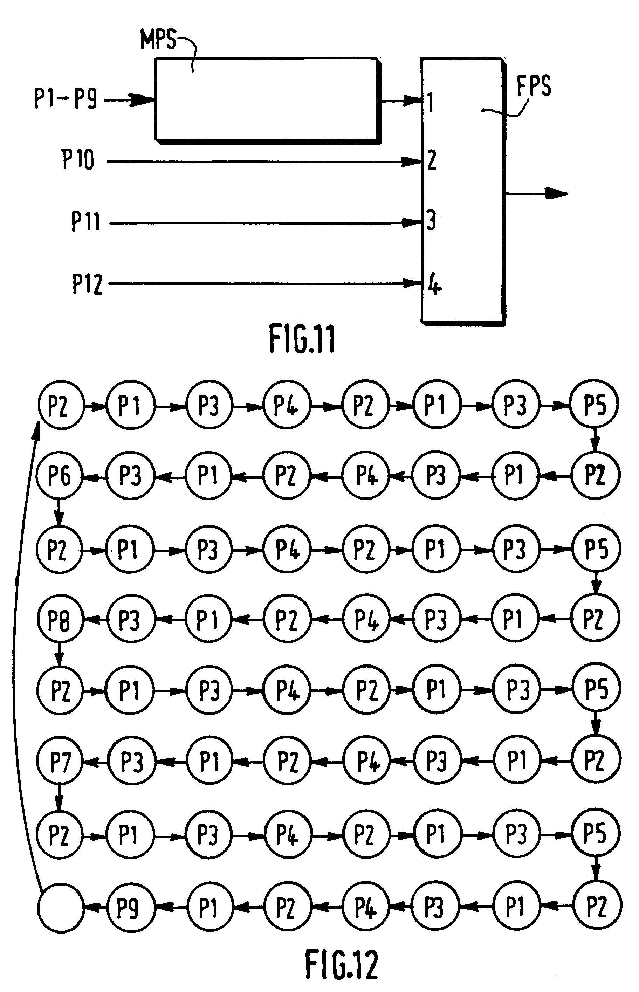

La Figure 11 illustre un arbitre pour gérer l'accès à la SDRAM par les différents processus P décrits ci-dessus. L'arbitre recueille les requêtes d'accès de tous les processus P et en sélectionne une. Une requête sélectionnée permet au processus ayant fait cette requête soit d'écrire soit de lire huit mots de 32 bits dans la SDRAM. Après cet accès à la SDRAM, l'arbitre sélectionne une autre requête, et cetera.

L'arbitre comprend un sélectionneur de processus MPS et un sélectionneur à priorité fixe FPS ayant quatre entrées 1-4. Le sélectionneur de processus MPS recueille les requêtes d'accès à la SDRAM des processus P1-P9. Il sélectionne parmi ces processus un processus P. Cette sélection se fait selon un schéma qui sera décrit plus en détail dans la suite. Si le processus P sélectionné a fait une requête, cette requête sera transmise à l'entrée 1 du sélectionneur à priorité fixe FPS. Si non, aucune requête ne sera transmise à cette entrée. Une requête du processus P10 (MC) est transmise à l'entrée 2 du sélectionneur à priorité fixe FPS. Une requête du processus P11 (INTERP) est transmise à l'entrée 3. Une requête du processus P12 (DMU) est transmise à l'entrée 4.

Le sélectionneur à priorité fixe FPS sélectionne parmi les requêtes aux entrées 1-4, s'il y en a, la requête à l'entrée ayant le numéro le plus bas. Donc, si le processus P sélectionné par le sélectionneur de processus MPS a fait une requête, cette requête sera sélectionnée. S'il n'y a pas une telle requête, le sélectionneur à priorité fixe FPS sélectionnera une requête du processus P10 (MC). S'il n'y a pas une telle requête, il sélectionnera une requête du processus P11 (INTERP). S'il n'y a pas une telle requête, le sélectionneur à priorité fixe FPS sélectionnera une requête du processus P12 (DMU). S'il n'y a aucune requête aux entrées 1-4 du sélectionneur à priorité fixe FPS, le sélectionneur de processus MPS sélectionne le processus P suivant qui figure dans son schéma.

La Figure 12 illustre un schéma selon lequel le sélectionneur de processus MPS peut sélectionner un processus. Ce schéma peut être mis en oeuvre par une machine à état. Dans ce cas, chaque cercle dans la Figure 12 représente un état. On pourrait dire qu'un processus P qui figure dans un cercle est propriétaire de l'état représenté par ce cercle. Un état constitue une possibilité soit d'écriture soit de lecture de huit mots de 32 bits dans la SDRAM. Cette possibilité est réservée au processus propriétaire de l'état et aux processus P10-P12 selon un ordre de priorité décrit ci-dessus. Il y a un seul cercle qui n'indique aucun processus P, un cercle "vide". On pourrait dire que l'état que représente ce cercle est un état libre; il n'y a aucun propriétaire. Dans cet état l'accès à la SDRAM est exclusivement réservé aux processus P10-P12.

En effet, chaque cercle, ou état, définit un sous-ensemble de processus pouvant accéder à la SDRAM et un ordre de priorité parmi ces processus. Le sous-ensemble comprend le processus qui figure dans le cercle, s'il y en a un, et les processus P10-P12. Si un seul processus du sous-ensemble a fait une requête, l'accès sera accordé à ce processus. Si plusieurs processus du sous-ensemble ont fait une requête, l'accès sera accordé au processus ayant la plus haute priorité. Quand l'accès est achevé, l'arbitre saute à l'état suivant. Si aucun processus du sous-ensemble n'a fait de requête, l'arbitre saute directement à l'état suivant.

Le schéma représenté par la Figure 12 constitue un cycle de 64 états. A cet égard il convient de noter la particularité suivante des états respectifs appartenant aux processus P8 (AUDIOFIFO) et P9 (AUDIOBUF). Les accès de ces processus sont en alternance en écriture et en lecture d'un cycle à l'autre. Cela veut dire que si le processus P8, ou le processus P9, a fait un accès en lecture dans un certain cycle, le processus concerné accèdera en écriture dans le cycle suivant, et vice versa.

La description ci-dessus en référence aux Figures illustre l'invention plutôt qu'elle ne la limite. Il est évident qu'il existe de nombreuses alternatives qui rentrent dans la portée des revendications ci-jointes. A cet égard, quelques remarques sont faites en conclusion.

L'invention peut être appliquée dans n'importe quel système fonctionnel. La Figure 1 illustre seulement un exemple selon lequel l'invention est appliquée dans un dispositif de traitement de données. Il est également possible, par exemple, d'appliquer l'invention dans un système de communication comprenant un serveur central et une pluralité de terminaux. L'invention peut être appliquée pour gérer l'accès au serveur central par les terminaux d'une façon avantageuse.

Il existe de nombreuses manières pour implémenter des fonctions au moyen d'articles physiques (en anglais: items of hardware) ou de logiciels (en anglais: software) ou d'une combinaison des deux. A cet égard, les figures sont très schématiques, chaque figure représentant un mode de réalisation seulement. Donc, bien qu'une figure montre différentes fonctions sous forme de blocs séparés, ceci n'exclut pas du tout qu'un seul article physique ou logiciel effectue plusieurs fonctions. Ceci n'exclut nullement qu'une fonction puisse être effectuée par un ensemble d'articles physiques ou de logiciels.

Par exemple, l'interface mémoire illustrée à la Figure 4 comprend différents blocs qui, en combinaison, contrôlent l'accès à la mémoire collective et qui contrôlent les mémoires comprises dans l'interface mémoire. En principe, il est possible d'implémenter ces blocs au moyen d'un circuit d'ordinateur convenablement programmé. Un jeu d'instructions contenu dans une mémoire de programmation peut provoquer le circuit d'ordinateur à effectuer les différentes opérations décrites précédemment en référence aux Figures 1-9. Le jeu d'instructions peut être chargé dans la mémoire de programmation par la lecture d'un support de données comme, par exemple, un disque qui contient le jeu d'instructions. La lecture peut s'effecteur par l'intermédiaire d'un réseau de communication comme, par exemple, l'Internet. Dans cas, un fournisseur de service (en anglais: service provider) mettra le jeu d'instructions à la disposition des intéressées.

Aucun signe de référence entre parenthèses dans une revendication ne doit être interprété de façon limitative. Le mot "comprenant" n'exclut pas la présence d'autres éléments ou étapes listés dans une revendication. Le mot "un" ou "une" précédant un élément ou une étape n'exclut pas la présence d'une pluralité de ces éléments ou ces étapes.

## Revendications

1. Système fonctionnel comprenant un ensemble de fonctions (F) devant accéder à une ressource collective (RSRC), le système comprenant une interface (INT) agencée pour mettre en oeuvre un schéma d'accès (AS) caractérisé par plusieurs états (S) parcourus d'une façon prédéterminée, un état (S) constituant une possibilité d'accès d'une certaine étendue et définissant un ordre de priorité selon lequel une fonction (F) peut accéder à la ressource collective (RSRC).

2. Système fonctionnel selon la revendication 1, caractérisé en ce qu'il y a au moins un état (S) définissant un ordre de priorité (PS) pour un sous-ensemble de fonctions (SUB) seulement.

3. Système fonctionnel selon la revendication 2, caractérisé en ce que l'interface est agencée pour sauter à l'état suivant dans le cas où aucune fonction comprise dans le sous-ensemble de fonctions (SUB) aurait une requête en cours.

4. Méthode pour gérer un système fonctionnel comprenant un ensemble de fonctions (F) et une ressource collective (RSRC) à laquelle les fonctions (F) doivent accéder, caractérisée en ce que la méthode comprend l'étape suivante:
- parcourir d'une façon prédéterminée une pluralité d'états (S), un état (S) constituant une possibilité d'accès d'une certaine étendue et définissant un ordre de priorité (PS) selon lequel une fonction (F) peut accéder à la ressource collective (RSRC).

5. Dispositif de traitement de données comprenant un ensemble de processeurs (P) devant accéder à une mémoire collective (MEM), le dispositif comprenant une interface mémoire (INT) agencée pour mettre en oeuvre un schéma d'accès (AS) caractérisé par plusieurs états (S) parcourus d'une façon prédéterminée, un état (S) constituant une possibilité d'accès d'une certaine étendue et définissant un ordre de priorité (PS) selon lequel un processeur (P) peut accéder à la mémoire collective (MEM).

6. Produit "programme d'ordinateur" pour un système fonctionnel comprenant un ensemble de fonctions (F) et une ressource collective (RSRC) à laquelle les fonctions (F) doivent accéder, caractérisé en ce que le produit "programme d'ordinateur" comprend un ensemble d'instructions qui, quand il est chargé dans le système fonctionnel, amène le système fonctionnel à effectuer la méthode revendiquée dans la revendication 4.
